# EUROPEAN PATENT APPLICATION

(11) **EP 3 570 523 A1**
(43) Date of publication of application: **20.11.2019**
(21) Application number: 19174533.0
(22) Date of filing: 14.05.2019
(51) Int. Cl.: H04L 29/08

(54) **SYSTEMS AND METHODS FOR REMOTE CONFIGURATION OF A BUILDING CONTROL SYSTEM INTO A BMS BASED SYSTEM**

(30) Priority: 17.05.2018 US 201815982979
(71) Applicant: Honeywell International Inc., Morris Plains, NJ 07950 (US)
(72) Inventor: NAIR, Ajay N., Morris Plains, NJ 07950 (US); RANJAN, Prabhat, Morris Plains, NJ 07950 (US); KARMAKAR, Sheeladitya, Morris Plains, NJ 07950 (US); VEMURI, Suresh, Morris Plains, NJ 07950 (US); MEHTA, Kamal, Morris Plains, NJ 07950 (US); MORE, Yogiraj Dattaram, Morris Plains, NJ 07950 (US)
(74) Representative: Houghton, Mark Phillip

(57) **Abstract**

Methods and systems for remote configuration of a building control system into a building management system, BMS, based system are disclosed herein. One remote management device allows a remote user to connect a new or legacy system to the BMS network includes a processor and memory, the memory having executable instructions that execute to receive identification information that allow a user on a user device to access a remote management application, send instructions to a gateway device to initiate a discovery protocol at the gateway device to identify any network devices connected to the gateway device, receive data related to each identified network device from the gateway device and create a device profile for each identified network device, initiate a discovery-of-origination-points protocol to discover all origination points for data that are relevant to a particular device of the identified devices, and update the device profile for that particular device.

## Description

### Technical Field

The present disclosure relates to methods and systems for remote configuration of a building control system into a BMS based system.

### Background

Building control systems, as used herein, describe complex systems that control: multiple devices as a group associated with a building, multiple groups within a building, or multiple buildings within a campus or dispersed in multiple locations. Accordingly, when a new or legacy building control system for a site is to be added to a building management system (BMS), which manages one or more of the control settings or operations of the building control system, the setup of this building control system within the BMS can be complex and time consuming.

Currently, there is no existing system which can help a System Integrator (SI) (i.e., a person tasked with the set up of the new or legacy building control system into the BMS) configure the BMS without physically visiting the site that is being controlled by the building control system. This can involve travel to the site, cost for accommodations, time to manually review the system can to determine device types and other device information, and other business costs.

Further the information about each device within the system needs to be individually identified by the SI. This process can make each installation take a day of activity for one single gateway, in many instances. For larger sites, for example with 500 gateways or more, such a process can lead to weeks and months of set up time which slows the speed at which the building control system can be integrated into the BMS and has a substantial cost in time for the SI.

Additionally, building control systems can belong to different software platform with each platform having its own user interface and a user of such a system, in order to accomplish its set up will need to understand this user interface. Accordingly, this work at the site requires a person with skill in the particular building control system (and its user interface) being installed and/or the existing building control system.

For example, Niagara is one of the most popular software programs used for building control. If the building control system is a Niagara system, in order to set up the system with the BMS, under the current process, the installer would have to be a trained Niagara professional who knows how to use the Niagara workbench (Niagara's user interface).

Use of a virtual private network (VPN) to allow the SI to work remotely from the installation site can be accomplished, but for some sites, the VPN connection involves the BMS provider to gain security access, which may take weeks to get clearance, in some instances. Moreover, the VPN experience is not smooth and can cause bottlenecks during implementation.

Also, typically, an equipment installer is trained to install the equipment correctly and is not trained in navigating the user interface or, generally, in the use of the building control system. Accordingly, under the current systems, in order to set up the building control system within the BMS, either the equipment installer needs to be trained to handle any of the many possible building control systems they will encounter, an installer specially trained in a specific building control system needs to be sent to the site, or a set up specialist, such as an SI, (in addition to the equipment installer) needs to the sent to the site.

Moreover, the existing systems do not provide the capabilities to do all configuration operations necessary to set up the building control system within the BMS at a location remote to the site. This also means an SI experienced in the particular building control system being used and/or the particular BMS being used must be physically present on the site, as the set up process involves a lot of technical training to know how to identify information that will be needed during the setup process and to navigate the BMS software.

### Brief Description of the Drawings

Figure 1 is an illustration of the components of a remote configuration system that could be used in accordance with embodiments of the present disclosure.
Figures 2A-2I illustrate screen shots of a work flow for setting up a building control system in a BMS in accordance with embodiments of the present disclosure.

### Detailed Description

Methods and systems for remote configuration of a building control system into a BMS based system are disclosed herein. One system includes

The embodiments of the present disclosure solve all the above issue because an on site installer just needs to install the physical gateway device and leave. Software within the gateway allows the rest of the set up process to be accomplished by an SI remotely through use of a network based tool (wide area network, such as the Internet, or local area network based) that helps the SI perform the configuration of the building control system into the BMS within minutes.

With embodiments of the present disclosure, the SI can accomplish many operations without having to travel to the site and can setup up many sites in quick succession, allowing their time to be used more efficiently and the building control systems to be integrated into the BMS more quickly allowing the BMS to be utilized more quickly with the newly added building control systems.

For example, with respect to the installer, embodiments of the present disclosure can provide:
- The ability to install hardware quickly and easily in confined and difficult to reach spaces.
- Install equipment with the minimum amount of wiring and configuration.
- Need to be able to find installation faults quickly and receive clear on-site feedback that the installation has been successful.
- Sell services to customers that don't manage their own buildings.
- Offer more comprehensive service contracts
- Reduce cost to serve - labor, system & equipment and therefore increase profit margins.

With respect to the facility manager (one type of end user) of the building control system, embodiments of the present disclosure can provide:
- Reduce time spent identifying and resolving BMS issues.
- Have automatic updates that run in the background and reduce on-site staff support
- Quickly and accurately find the root-cause of problems and fault diagnosis.

With respect to the SI, embodiments of the present disclosure can provide:
- Quickly obtain the required/needed data to have services up and running.
- Be able to provide service recommendation based upon identified data being pulled from the system.
- Increase the speed of system configuration and demonstrate uptime.
- Quickly and effortlessly consolidate data from controllers to building model

### For an End User (Building Operator)

With respect to the building operator (another type of end user) of the building control system, embodiments of the present disclosure can provide:
- Reduce time spent managing a building or multiple buildings(s).
- Reduce equipment and systems downtime at sites
- Reduce operating costs (energy & maintenance)
- Reduce the complexity and time for training staff in operating the systems

This disclosure helps
1. SI (System Integrator) to do all BEMS configuration and management remotely at his preferred location "remotely" and avoid any travel or physical presence required
2. Site Engineer can do the setup with no technical knowledge or Niagara experience
3. SI easily perform all BEMS configuration such as Network setup , addition of devices, alarm and trend configuration and others.
4. Install equipment with the minimum amount of wiring and configuration.
5. Helps in Reduce cost to serve - labor, system & equipment and therefore increase profit margins
6. Reduce time spent identifying and resolving BEMS issues.
7. Reduce on-site staff support
8. Reduce operating costs (energy & maintenance)
9. Reduce the complexity and time for training staff in operating the systems
10. Increase the speed of system configuration and demonstrate uptime.
11. Quickly and effortlessly consolidate data from controllers to building model

In short, this disclosure just expects a less trained Site Engineer to visit the site, set the gateway with the cables and then can leave the site. The gateway automatically registers with the Honeywell Sentience (Azure Cloud) platform and sends the heartbeat. No additional work is required from the Site Engineer. Once the Gateway starts communicating with the Sentience, the below work flow helps the System Integrator and other users described above to do all the configuration tasks remotely and thus save all the travel cost involved.
1. Remote Engineer connects to the Remote Management App using a browser
2. He selects the Site-Gateway that needs to be remotely configured
3. He adds a local BACnetNetwork (others can be SBCNEtwork, LON Network, etc.) in his local Niagara database
4. He initiates Discovery feature - This shall send a "Discover" System command (using Sentience command) to the remote
   Gateway and this in turn initiates the discovery of BACnet devices connected to the Gateway.
5. A list of BACnet devices will be send as response from the Gateway to Sentience EventHub. As soon as the response is
   received, the listener of EventHub would display this list of devices in the SI's local Niagara database
6. Next he initiates the discovery of Points. This shall be send as a system command "Discover Points" using Sentience Command
   to Niagara.
7. Gateway discovers all the points for that particular device and sends the response as explained in step (5)
8. Similarly he does other configuration, such as:
   a. Alarms Configuration
   b. Trend Configuration
   c. Facets / Other configuration
9. He initiates the "Publish" command . This shall push all the above remotely configured settings from his local database to Gateway

In the following detailed description, reference is made to the accompanying drawings that form a part hereof. The drawings show by way of illustration how embodiments of the disclosure may be practiced.

These embodiments are described in sufficient detail to enable those of ordinary skill in the art to practice embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

The figures herein follow a numbering convention in which the first digit or digits correspond to the drawing figure number and the remaining digits identify an element or component in the drawing.

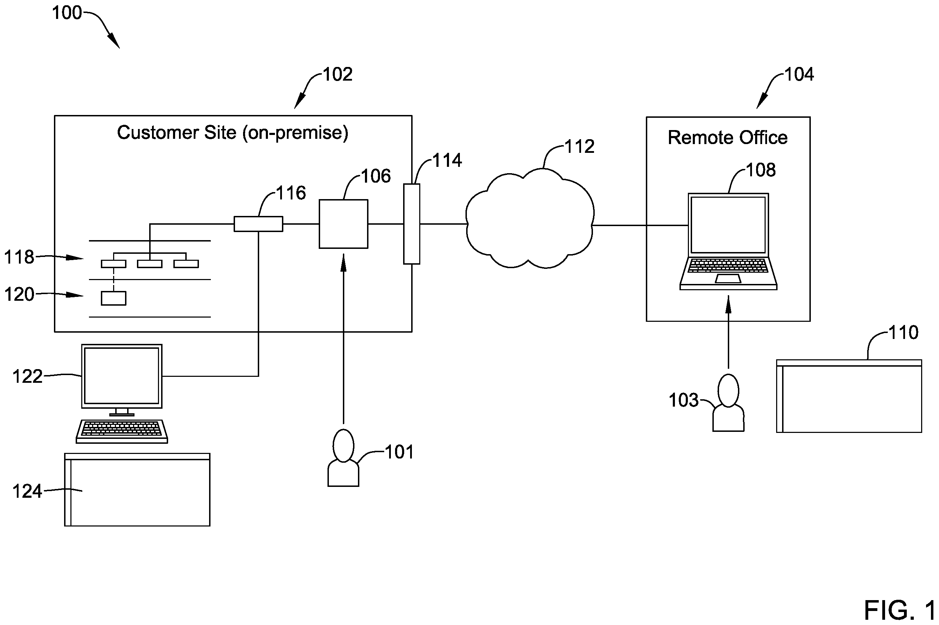

Figure 1 is an illustration of the components of a remote configuration system that could be used in accordance with embodiments of the present disclosure.

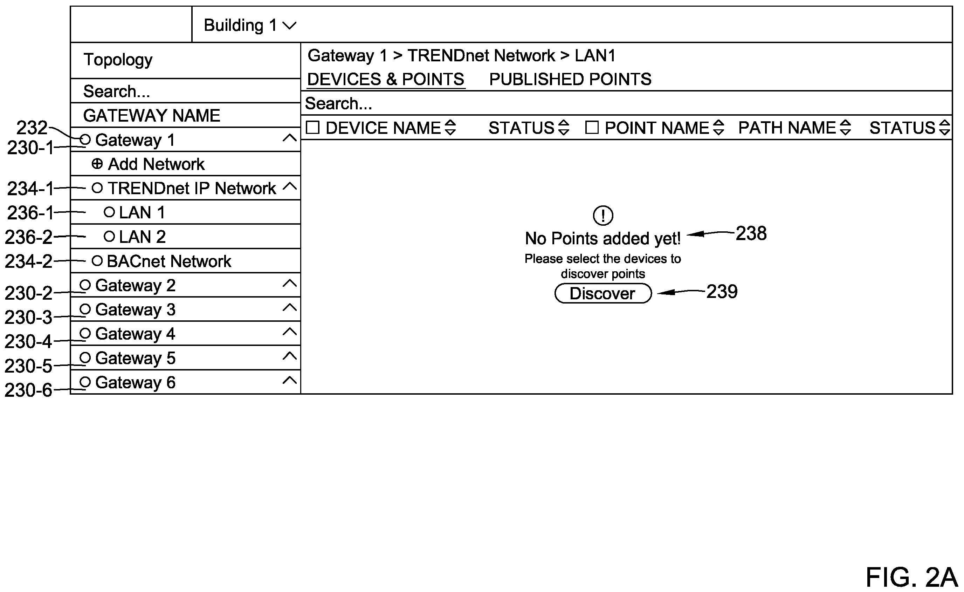

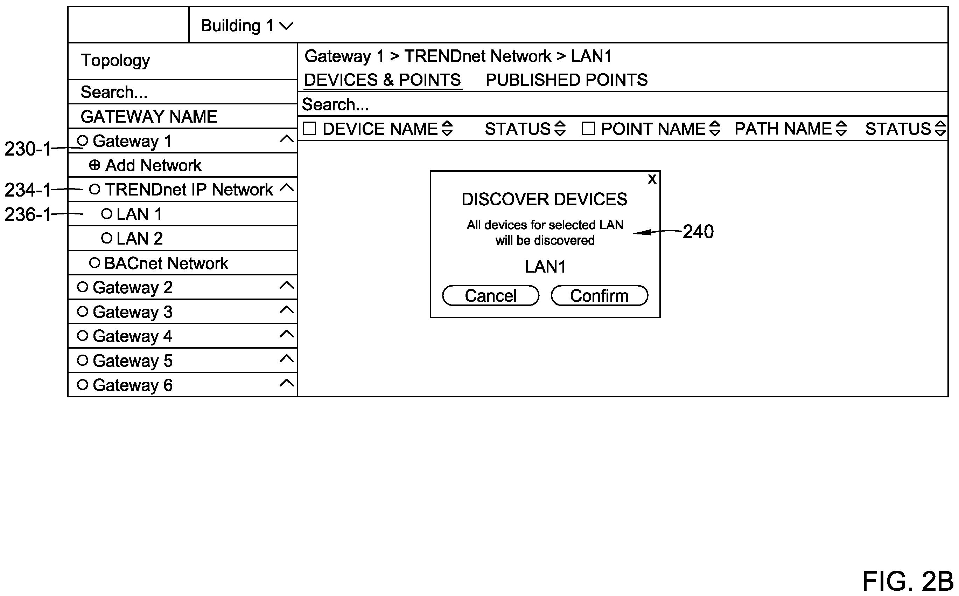

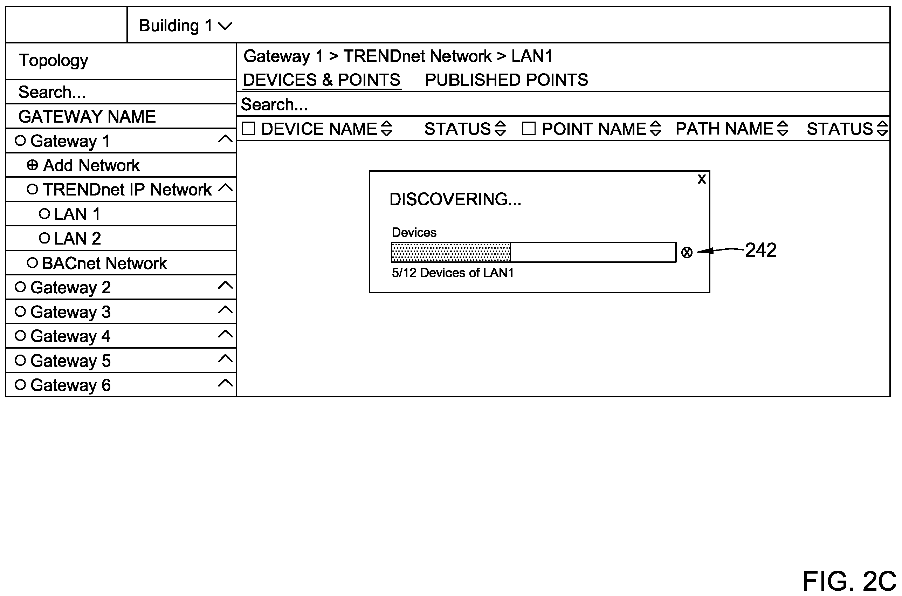

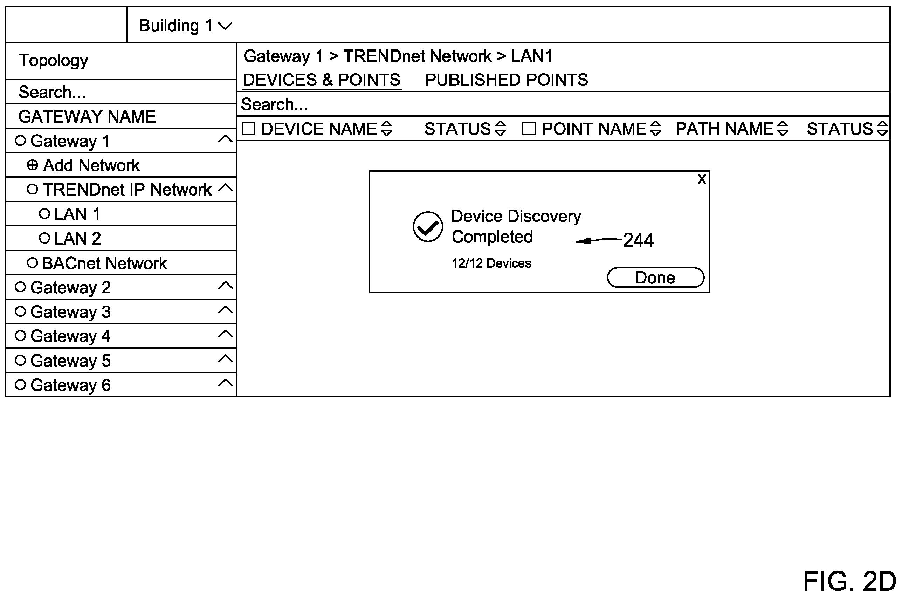

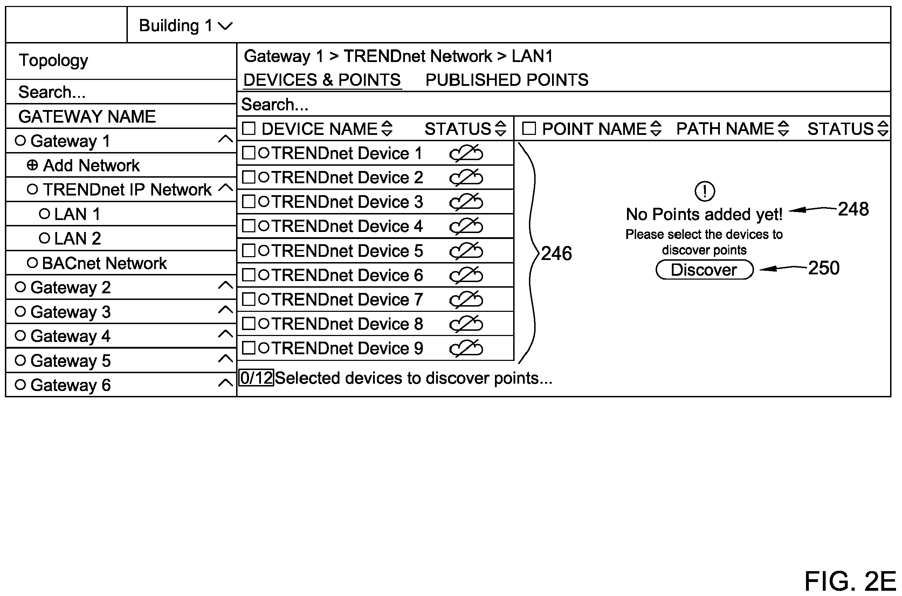

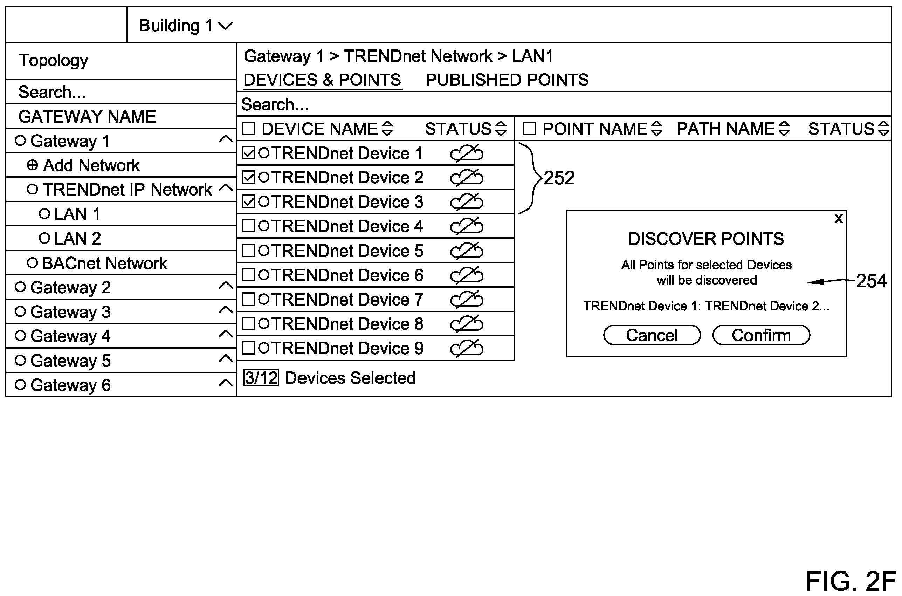

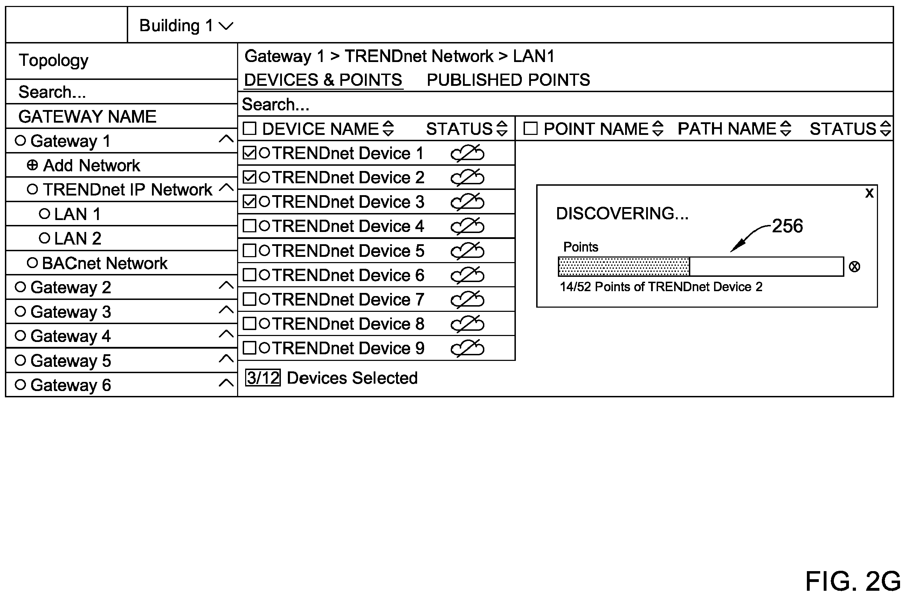

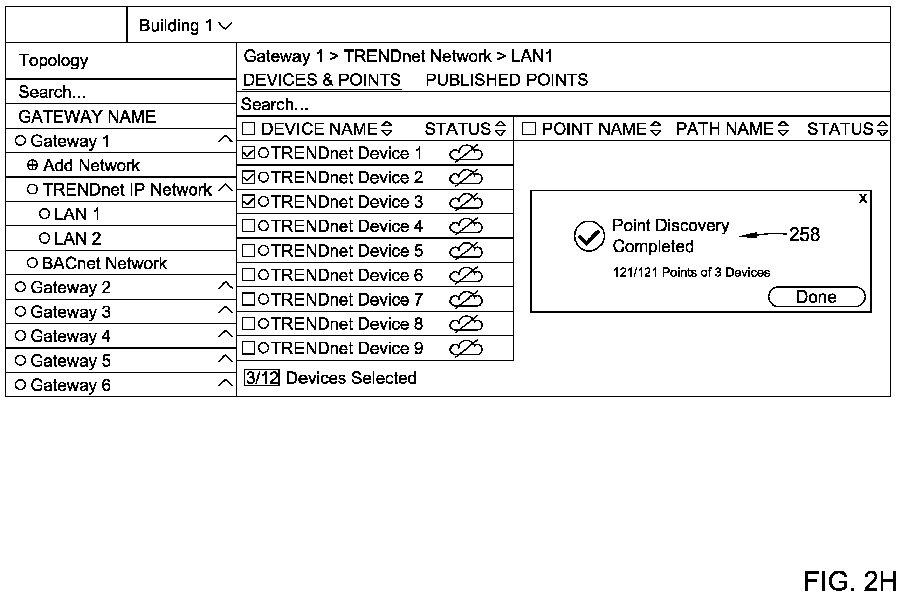

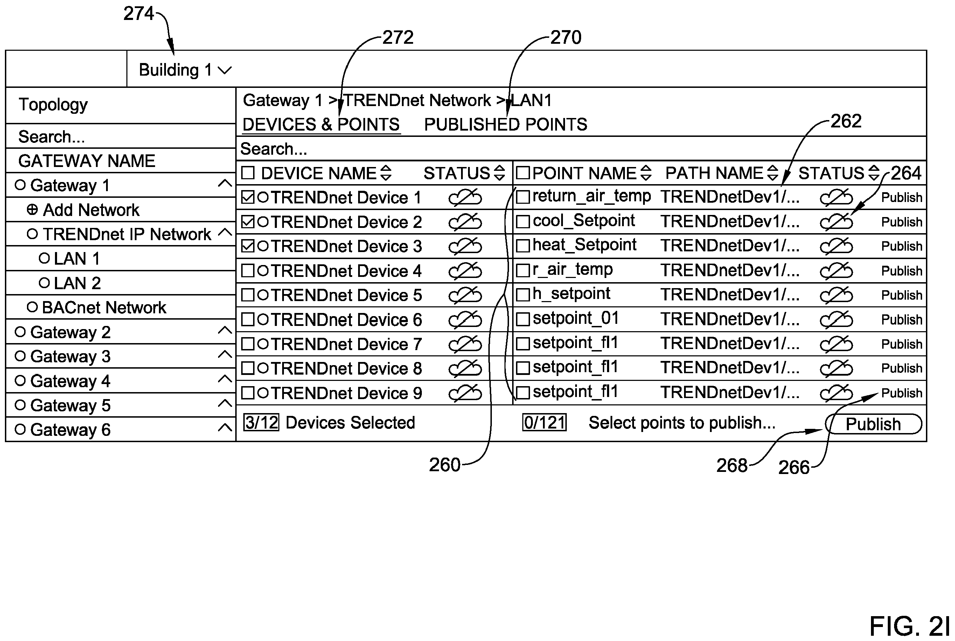

Figures 2A-2I illustrate screen shots of a work flow for setting up a building control system in a BMS in accordance with embodiments of the present disclosure.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A remote management device allowing a remote user to connect a new or legacy system to a BMS network, comprising:
a processor and memory, the memory having executable instructions that execute to:
provide a user using a user device access to a remote management application;
receive a selection of a gateway device that needs to be connected to the BMS network;
initiate a connection to the gateway device;
send instructions to the gateway device to initiate a discovery protocol at the gateway device to identify any network devices connected to the gateway device;
receive data related to each identified network device from the gateway device and create a device profile for each identified network device;
display a list of the identified network devices on a display component;
initiate a discovery of origination points protocol that sends instructions to the gateway device to discover all origination points for data that are relevant to a particular device of the identified network devices; and
update the device profile for that particular device in memory.

2. The device of claim 1, wherein initiating a connection to the gateway device includes adding a local network reference to a local network database.

3. The device of any one of claims 1 or 2, wherein a first particular device in the identified network devices has a first operating protocol and wherein a second particular device in the identified network devices has a second operating protocol and wherein the remote management device receives information about the operating protocols and includes configuration settings that can be used with devices of each of several operating protocols.

4. The device of claim 3, wherein the remote management device selects configuration settings to be sent to the gateway device based on the operating protocol of the particular device to which the configuration settings are to be installed.

5. A remote management device allowing a remote user to connect a new or legacy system to a BMS network, comprising:
a processor and memory, the memory having executable instructions that execute to:
provide a user using a user device access to a remote management application;
receive a selection of a gateway device that needs to be connected to the BMS network;
initiate a connection to the gateway device;
send instructions to the gateway device to initiate a discovery protocol at the gateway device to identify any network devices connected to the gateway device;
receive data related to each identified network device from the gateway device and create a device profile for each identified network device;
display a list of the identified network devices on a display component;
initiate a discovery of origination points protocol that sends instructions to the gateway device to discover all origination points for data that are relevant to a particular device of the identified network devices;
update the device profile for that particular device in memory;
create configuration settings for the particular device and update the device profile with the configuration settings; and
send the configuration settings to the gateway device.

6. The device of claim 5, wherein the configuration settings include one or more alarm configuration settings, and the alarm configuration settings optionally include settings to forward alarm information to the gateway for forwarding to the remote management device.

7. The device of any one of claims 5 or 6, wherein the configuration settings include one or more trend configuration settings, and the trend configuration settings optionally include settings to forward trend information to the gateway for forwarding to the remote management device.

8. The device of any one of claims 5 to 7, wherein the configuration settings include one or more facet configuration settings.

9. The device of any one of claims 5 to 8, wherein a first particular device in the identified network devices has a first operating protocol and wherein a second particular device in the identified network devices has a second operating protocol and wherein the remote management device receives information about the operating protocols and includes configuration settings that can be used with devices of each of several operating protocols.

10. The device of claim 9, wherein the remote management device selects configuration settings to be sent to the gateway device based on the operating protocol of the particular device to which the configuration settings are to be installed.

11. A remote management device allowing a remote user to connect a new or legacy system to a BMS network, comprising:
a processor and memory, the memory having executable instructions that execute to:
receive identification information that allow a user on a device connected to the remote management device to access a remote management application that is stored in memory;
authorize the user to access the remote management application;
receive a selection of a gateway device that need to be configured for connection to the BMS network;
initiate a connection to the gateway device;
send instructions to the gateway device to initiate a discovery protocol at the gateway device to identify any network devices connected to the gateway device;
receive data related to each identified network device from the gateway device and create a device profile for each identified network device;
display a list of the identified network devices on a display component;
initiate a discovery of origination points protocol that sends instructions to the gateway device to discover all origination points for data that are relevant to a particular device of the identified network devices;
update the device profile for that particular device in memory;
create configuration settings for the particular device and update the device profile with the configuration settings; and
send the configuration settings to the gateway including instructions to install the configuration setting on the particular device by the gateway device.

12. The device of claim 11, wherein the identification information includes an identifier of the user using the user device.

13. The device of claim 12, wherein the identifier of the user using the user device includes a user name and password.

14. The device of any one of claims 9 to 13, wherein the remote management device also includes instructions to receive a heartbeat signal from the gateway device, and the heartbeat signal optionally includes information regarding the identification of the gateway device.

15. The device of any one of claims 9 to 14, wherein the information regarding the identification of the gateway device is included in a list of devices available for connection to the BMS network from which the user selects the gateway device that needs to be connected to the BMS network.
